Europäisches Patentamt

European Patent Office

Office européen des brevets

(19)

(11) Numéro de publication: **0 035 954**
**B1**

(12) **FASCICULE DE BREVET EUROPEEN**

(45) Date de publication du fascicule du brevet: **20.06.84**

(51) Int. Cl.³: **D 03 C 1/00, F 16 H 35/02**

(21) Numéro de dépôt: **81420033.3**

(22) Date de dépôt: **09.03.81**

(54) Perfectionnements aux mécanismes modulateurs pour la commande des ratières rotatives.

(30) Priorité: **11.03.80 FR 8005855**

(43) Date de publication de la demande:
**16.09.81 Bulletin 81/37**

(45) Mention de la délivrance du brevet:
**20.06.84 Bulletin 84/25**

(84) Etats contractants désignés:
**BE CH DE IT LI**

(56) Documents cités:
**DE - A - 2 062 980**
**DE - B - 2 937 760**
**FR - A - 979 064**

**PRODUCT ENGINEERING, vol. 31, 4 janvier 1960**
**MORGAN-GRAMPIAN PUBLISHING CORP. J.**
**KAPLAN: "Cam control gets more out of a**
**planetary gear", pages 38-39**
**MACHINE DESIGN, vol. 37, 25 novembre 1965**
**PENTON INC. CLEVELAND, US "Scanning the**
**field for ideas", page 157**

(73) Titulaire: **S.A. DES ETABLISSEMENTS STAUBLI**
**(France)**
**B.P. 20**
**F-74210 Faverges (FR)**

(72) Inventeur: **Palau, Joseph**
**"Les Perris"**
**F-74410 Duingt (FR)**

(74) Mandataire: **Monnier, Guy et al,**
**Cabinet Monnier 142-150 Cours Lafayette**
**F-69003 Lyon (FR)**

Courier Press, Leamington Spa, England.

## Description

On sait que dans les ratières rotatives les cadres de lisses prévus sur le métier à tisser afin d'assurer la formation de la foule en fonction de l'armure à réaliser sur le tissue sont commandés, non pas par des balanciers soumis à l'action de couteaux à mouvement alternatif comme dans les ratières classiques, mais par des bielles montées sur des excentriques qu'un système de solidarisation sélective, placé sous la dépendance du dispositif de lisage de la machine, permet de lier angulairement soit à un arbre d'entraînement pour opérer le déplacement de la bielle envisagée et du cadre correspondant, soit à ladite bielle en vue de son immobilisation.

Le système de solidiarisation sélective ne peut évidemment fonctionner que si l'arbre d'entraînement ou arbre principal de la ratière est à l'arrêt, de telle sorte qu'il est indispensable d'animer ledit arbre d'un mouvement de rotation intermittent avec immobilisation angulaire tous les 180°. Comme par ailleurs cet arbre doit nécessairement être lié à celui du métier à tisser correspondant afin d'assurer la synchronisation parfaite de la ratière et du métier, l'on est amené à faire comporter aux ratières rotatives une transmission mécanique propre à tranformer le mouvement de rotation continu en mouvement de rotation intermittent. Par ailleurs il est du plus haut intérêt de moduler ce mouvement intermittent afin de soumettre le déplacement vertical des cadres de lisses à une loi précise bien adaptée et de permettre le fonctionnement sans heurt de l'ensemble de la mécanique aux grandes vitesses de tissage maintenant appliquées aux métiers.

Les mécanismes modulateurs qui ont été proposés jusqu'à ce jour pour la commande des ratières rotatives font appel à différentes principes mécaniques. C'est ainsi qu'on a eu recours à des systèmes d'engrenages planétaires cycloïdaux associés à des dispositifs à came fixe, comme décrit dans le document DE—A—2 062 980. On peut cependant noter que les constructions connues sont relativement complexes et manquent de fiabilité, par suite notamment de la présence d'organes dentés; du fait de la pluralité et de la discontinuité des dentes d'engrenages, il est impossible d'obtenir une continuité dans le mouvement modulé de sortie et d'éviter l'apparition de vibrations angulaires parasites très gênantes. En outre ces constructions connues présentent un encombrement important et elles se prêtent mal à la modification, lorsque désiré, de la loi appliquée au mouvement vertical des cadres de lisses.

Les perfectionnements qui font l'objet de la présente invention ont plus spécialement pour but de remédier aux inconvénients précités et de permettre la réalisation d'un mécanisme modulateur qui soit susceptible de répondre particulièrement bien aux divers desiderata de la pratique.

Le mécanisme suivant l'invention, du genre comprenant une came fixe pour l'actionnement d'au moins un galet suiveur porté par un support tournant qui est lié à l'arbre du métier pour se déplacer de manière continue autour de la came précitée et qui est associé à des moyens propres à transmettre son mouvement oscillatoire à l'arbre principal de la ratière pour impartir à celui-ci un mouvement de rotation intermittent, est caractérisé en ce qu'en vue d'éviter tout organe denté risquant d'introduire un effet de discontinuité et de vibrations angulaires, les moyens de transmission comprennent au moins un dé qui se déplace à l'intérieur d'une coulisse ménagée dans le support porte-galet et qui est pourvu d'au moins un bossage pour l'articulation d'un maneton solidaire de l'arbre principal de la ratière.

Conformément à un mode de mise en oeuvre préféré de l'invention, la came fixe est constituée par deux disques parallèles établis à des profils complémentaires pour assurer l'actionnement des deux paires de galets suiveurs portées par deux supports tournantes, lesquels sont montés sur une cage tournante qui entoure les disques précités et qui est entraînée, en rotation continue par l'arbre du métier.

D'autres dispositions remarquables du mécanisme modulateur suivant l'invention ressortiront de la description qui va suivre en référence au dessin annexé, lequel dessin, donné à titre d'exemple, permettre de mieux comprendre l'invention, les caractéristiques qu'elle présente et les avantages qu'elle est susceptible de procurer:

Figure 1 est une coupe axiale d'un mécanisme modulateur établi conformément à l'invention.

Figure 2 en est une coupe transversale suivant le plan indiqué en II—II en fig. 1; sur cette figure on a fait apparaître en I—I le plan de coupe de fig. 1.

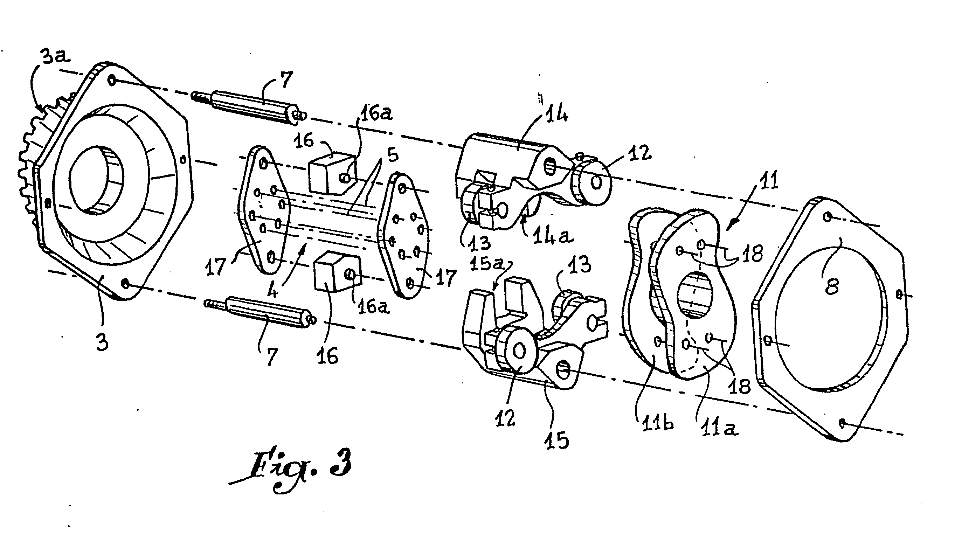

Fig. 3 est une vue en perspective montrant, préalablement à leur assemblage, les principales pièces du mécanismes suivant fig. 1 et 2.

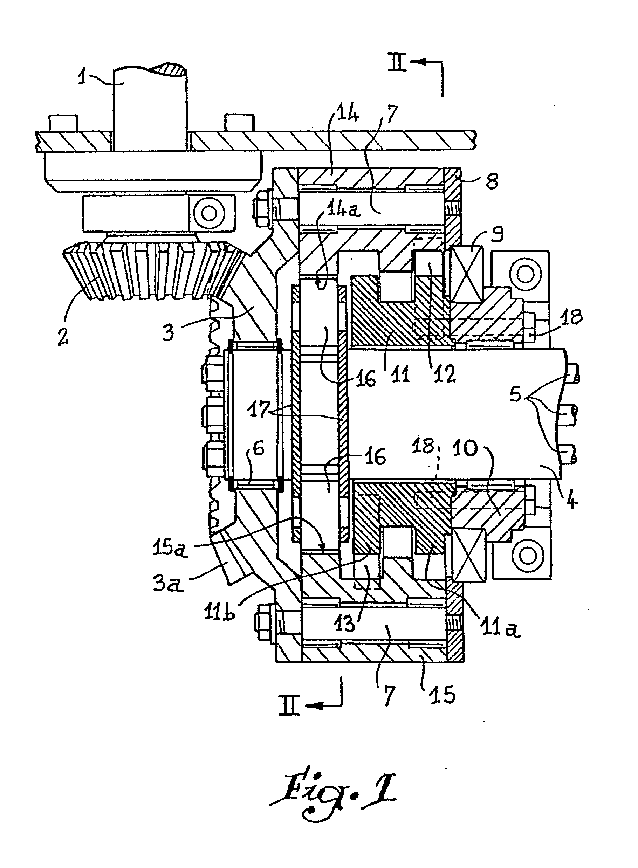

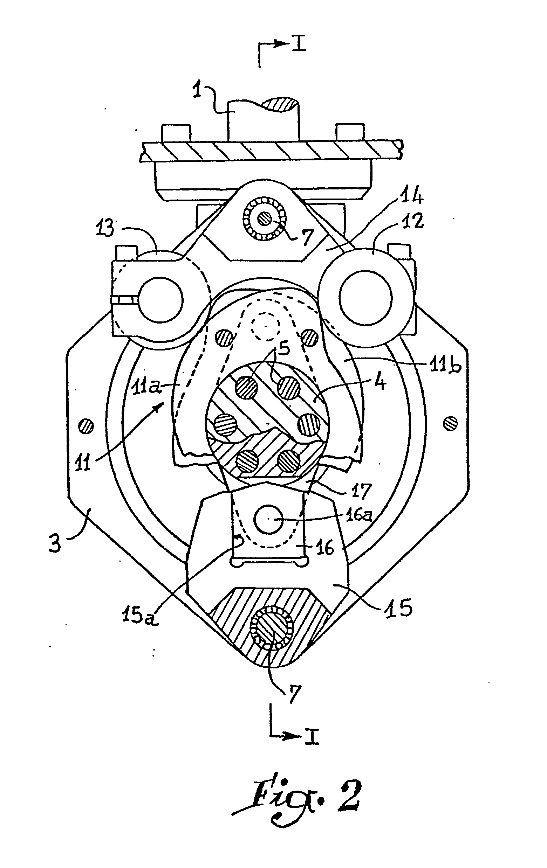

En fig. 1 et 2 la référence 1 désigne l'arbre du métier qui est destiné à assurer l'entraînement de la ratière associée au mécanisme modulateur considéré. L'extrémité de cet arbre 1 porte un pignon conique 2 qui engrène avec une couronne dentée 3a prévue sur la face arrière d'un plateau 3, lequel tourillonne librement en boute de l'arbre principal 4 de la ratière, orienté perpendiculairement à l'arbre 1 précité. Dans l'exemple de réalisation envisagé, cet arbre principal 4 a été suppposé constitué par une série de pièces cylindriques assemblées par des tirants longitudinaux 5, un roulement 6 étant interposé entre cet arbre 4 et l'ouverture centrale du plateau 3.

Comme plus particulièrement montré en fig.

3, en deux points diamétralement opposés le plateau 3 est rendu solidaire de deux axes longitudinaux 7 supportés à leur extrémité libre par un disque 8. L'ouverture de ce disque 8 reçoit un roulement 9 (fig. 1) qui repose sur une partie fixe 10 de la ratière, et l'on comprend que les pièces 3-7-8 constituent une sorte de cage qui tourne autour de l'arbre 4 lorsque l'arbre 1 est entraîné en rotation.

La partie fixe ou noyau 10 est solidaire latéralement d'une came 11 qui se trouve disposée à l'intérieur de la cage 3-7-8 précitée. Cette came fixe 11 est formée par deux disques parallèles 11a et 11b établis à des profils complémentaires, à la façon bien connue dans la technique des cames dites "complémentaires"; contre chacun de ces disques 11a et 11b roulent deux galets suiveurs 12 et 13, les deux galets 12, respectivement 13 étant montés sur un même support 14, 15 en étant décalés transversalement l'un par rapport à l'autre. Les supports 14 et 15 sont montés fous sur les axes 7 de la cage tournante 3-7-8.

En arrière des galets 12 et 13, chaque support 14 ou 15 est profilé pour présenter une coulisse centrale 14a, 15a qui s'ouvre en direction de l'arbre 4 et à l'intérieur de laquelle est monté à glissement un dé 16. Chaque dé est pourvu de deux bossages opposés 16a sur chacun desquels s'articule l'extrémité de deux manetons 17 qui réunissent ainsi l'un à l'autre lesdits dés, la partie centrale de ces manetons 17 étant traversée par les tirants 5 de façon à être ainsi rendue solidaire de l'arbre 4.

Le fonctionnement du mécanisme modulateur ci-dessus décrit découle des explications qui précèdent et se comprend aisément.

La rotation continue de la cage 3-7-8 entraînée par l'arbre du métier 1 provoque le roulement des galets 12 et 13 contre la périphérie des disques 11a et 11b de la came fixe 11, ce qui engendre un mouvement oscillant au niveau des supports 14 et 15. Les oscillations de ces supports sont transmises par les dés coulissants 16 et les manetons 17 à l'arbre principal 4 de la ratière, si bien que ledit arbre est entraîné en rotation de manière intermittente. Il va de soi que la came fixe 11 peut être profilée de façon à impartir à l'arbre 4 une loi de mouvement bien précise, comportant en succession, après chaque arrêt dudit arbre, une accélération puis un déplacement angulaire à une vitesse substantiellement contante, bien supérieure à la vitesse de rotation de la cage, et enfin une décélération progressive allant jusqu'à un nouvel arrêt, ce dernier survenant après un demi-tour de l'arbre 4.

Sur le plan mécanique l'ensemble du mécanisme se présente sous une forme très compacte, parfaitement équilibrée par suite des deux supportes oscillants 14 et 15. Le nombre des pièces est réduit et par suite de l'absence de tout organe denté et du contact permanent entre chaque dé 16 et sa coulissé 14a ou 15a, on obtient une continuité parfaite dans la transmission du mouvement, évitant tout risque de vibrations angulaires, en même temps que la maintenance de l'ensemble est susceptible d'être effectuée de manière simple et pratique. On notera en outre que le remplacement de la came fide 11 peut s'opérer de manière très aisée, sans impliquer aucune manoeuvre complexe puisqu'il suffit d'accéder aux vis 18 (fig. 1) qui assurent la fixation de ladite came sur la partie fixe 10, elle-même parfaitement accessible.

## Revendications

1. Mécanisme modulateur pour la commande des ratières rotatives, du genre comprenant une came fixe (11) pour l'actionnement d'au moins un galet suiveur (12, 13) porté par un support tournant (14, 15) qui est lié à l'arbre du métier (1) pour se déplacer de manière continue autour de la came précitée et qui est associé à des moyens propres à transmettre son mouvement oscillatoire à l'arbre principal de la ratière (4) pour impartir à celui-ci un mouvement de rotation intermittent, caractérisé en ce qu'en vue d'éviter tout organe denté risquant d'introduire un effet de discontinuité et de vibrations angulaires, les moyens de transmission comprennent au moins un dé (16) qui se déplace à l'intérieur d'une coulisse (14a, 15a) ménagée dans le support porte-galet (14, 15) et qui est pourvu d'au moins un bossage (16a) pour l'articulation d'un maneton (17) solidaire de l'arbre principal de la ratière (4).

2. Mécanisme modulateur suivant la revendication 1, du genre comprenant deux supports porte-galets (14, 15) montés sur une cage tournante liée à l'arbre du métier (1), caractérisé en ce que la cage tournante est formée par un plateau latéral (3) qui est lié angulairement à l'arbre du métier (1) et qui est rénui à un disque opposé (8) par deux axes longitudinaux (7) sur lesquels sont montés fous les deux supports porte-galets (14, 15) disposés de part et d'autre de la came fixe (11) prévue démontable, les deux dés coulissants (16) coopérant avec ces supports étant reliés l'un à l'autre par deux manetons (17) agencés de façon à ce que leur partie centrale soit assemblée à l'arbre principal de la ratière (4).

## Patentansprüche

1. Modulationseinrichtung zur Steuerung von Rotationsschaftmaschinen des Typs, der eine feste Nocke (11) zur Betätigung wenigstens einer Folgerolle (12, 13) aufweist, die von einem drehenden Träger (14, 15) getragen wird, der mit der Webmaschinenwelle (1) verbunden ist, um sich kontinuierlich um die vorstehen genannte Nocke zu verschieben und der eine entsprechende Einrichtung zugeordnet ist, die seine oszillierende Bewegung auf die Hauptwelle der Schaftmaschine (4) überträgt, um dieser eine intermittierende Drehbewegung zu erteilen, dadurch gekennzeichnet, daß zum Vermeiden, daß jegliches verzahntes Maschinenelement eine Wirkung der Diskontinuität und von Winkelvibrationen vielleicht einleiten könnte, die Übertragungseinrichtung wenigstens einen Sockel (16) aufweist, der sich im Inneren eines Gleitstücks (14a, 15a) verschiebt, das in dem die Rolle tragenden Träger (14, 15) vorgesehen ist, und der mit wenigstens einem Auge (16a) zur Gelenkverbindung eines Kurbelzapfens (17) versehen ist, der fest mit der Hauptwelle der Schaftmaschine (4) verbunden ist.

2. Modulationseinrichtung nach Anspruch 1, des Typs, der zwei Rollen tragende Träger (14, 15) aufweist, die an einem sich drehenden Gehäuse angebracht sind, das mit der Webmaschinenwelle (1) verbunden ist, dadurch gekennzeichnet, daß das sich drehende Gehäuse von einer seitlichen Platte (3) gebildet wird, die unter einem Winkel mit der Webmaschinenwelle (1) verbunden ist, und die mit einer gegenüberliegenden Scheibe (8) über zwei Längsachsen (7) verbunden ist, auf denen die beiden die Rollen tragenden Träger (14, 15) lose angebracht sind, und daß die beiden gleitbeweglichen Sockel (16), die mit den Trägern zusammenarbeiten, miteinander über zwei Kurbelzapfen (17) verbunden sind, die derart antreibbar sind, daß ihr Mittelteil mit der Hauptwelle der Schaftmaschine (4) verbindbar ist.

## Claims

1. Modulator mechanism for controlling rotating dobbies, of the type comprising a fixed cam (11) for actuating at least one follower roller (12, 13) borne by a rotating support (14, 15) which is connected to the shaft of the loom (1) to move continuously around the said cam and which is associated with means adapted to transmit its oscillatory movement to the main shaft of the dobby (4) to impart thereto an intermittent movement of rotation, characterized in that, with a view to avoiding any toothed member risking introducing an effect of discontinuity and of angular vibrations, the transmission means comprise at least one block (16) which moves inside a slide (14a, 15a) made in the roller-bearing support (14, 15) and which is provided with at least one boss (16a) for the articulation of a crank pin (17) fast with the main shaft of the dobby (4).

2. Modulator mechanism according to Claim 1, of the type comprising two roller-bearing supports (14, 15) mounted on a rotating cage connected to the shaft of the loom (1), characterized in that the rotating cage is formed by a lateral plate (3) which is angularly connected to the shaft of the loom (1) and which is connected to an opposite disc (8) by two longitudinal spindles (7) on which are idly mounted the two roller-bearing supports (14, 15) disposed on either side of the fixed cam (11) provided to be dismountable, the two sliding blocks (16) cooperating with these supports being connected to each other by two crank pins (17) arranged so that their central part is assembled on the main shaft of the dobby (4).

*Fig. 1*

Fig. 2

Fig. 3

0 035 954